# EUROPÄISCHE PATENTSCHRIFT

(11) **EP 1 126 580 B1**
(45) Veröffentlichungstag und Bekanntmachung des Hinweises auf die Patenterteilung: **06.10.2004**
(21) Anmeldenummer: 01101882.7
(22) Anmeldetag: 27.01.2001
(51) Int. Cl.: H02K 5/22

(54) **Steckerverbindung für die elektrischen Anschlüsse von Statorwicklungen eines Aussenläufermotors**
Connector for the electrical connection of the stator windings of a motor with outer rotor
Connecteur pour la connection électrique des enroulements statoriques d'un moteur à rotor externe

(30) Priorität: 17.02.2000 DE 20002869 U
(43) Veröffentlichungstag der Anmeldung: 22.08.2001
(73) Patentinhaber: ebm-papst Mulfingen GmbH & Co.KG, 74673 Mulfingen (DE)
(72) Erfinder: Streng, Gunter Dipl. Ing., 74575 Schrozberg (DE); Erneker, Roland, 74653 Künzelsau-Amrichshausen (DE); Bamberger, Bernhard, 97922 Lauda-Unterbalbach (DE)
(74) Vertreter: Patentanwälte Dr. Solf & Zapf

(56) Entgegenhaltungen:
- DE-A- 4 209 823
- DE-U- 29 904 361

## Beschreibung

Die vorliegende Erfindung betrifft einen Elektromotor, insbesondere einen Außenläufermotor, mit einem Rotor, mit einem Stator und mit einer über Steckerverbindungen elektrische Anschlüsse von Wicklungen des Stators kontaktierenden Geräteeinheit, welche an einer Frontseite des Elektromotors über Rastverbindungen, die aus einander korrespondierenden Rastelementen gebildet sind, befestigbar ist.

Ein Elektromotor der vorstehend genannten Art ist aus der DE 42 09 823 A1 bekannt. Diese deutsche Offenlegungsschrift beschreibt einen Schrittmotor, der im wesentlichen aus einem Gehäuse, einem Rotor und wenigstens einem Stator besteht, bei welchem die Anschlußstifte des Stators aus dem Gehäuseboden axial herausragen, wobei die Anschlußstifte in Steckerblöcken integriert sind. Die über Steckerverbindungen die elektrische Anschlüsse von Wicklungen des Stators kontaktierenden Geräteeinheit ist ein Kupplungsteil, das Steckerbuchsen aufweist, in die die am Gehäuse befindlichen Steckerblöcke eingreifen. Das Kupplungsteil weist einen scheibenförmigen Boden auf, der auf der dem Gehäuse abgewandten Seite Lötstifte zur Herstellung einer elektrischen Verbindung mit einer Steuereinheit des Motors trägt. Die mechanische Verbindung des Gehäuses mit dem Kupplungsteil, das integraler Bestandteil einer Leiterplatte sein kann, erfolgt über Rastelemente.

Die DE 195 21 393 A1 hat einen Lüfter für eine Klimaanlage eines Fahrzeugs zum Gegenstand. Bei diesem kompakten Lüfter, der insbesondere für ein Fahrzeug mit einem an einer Lüfterhaube mittels Tragarmen befestigten Antriebsmotor bestimmt ist, sind zwecks einfacher Herstellung und Montage die Tragarme mit mindestens einem ein Mantelgehäuseteil des Motorgehäuses verschließenden Lagerschild einstückig ausgebildet. Die Lagerschilde des Antriebsmotors sind auf die freien Enden des zylinderförmigen Mantelgehäuseteiles aufschiebbar und durch Rastmittel mit dem Mantelgehäuseteil verbindbar. Die Rastmittel sind durch federnde Rastklinken am Lagerschild und korrespondierende Rastausnehmungen im Mantelgehäuseteil gebildet. Die Rastklinken können an ihren freien Kopfenden Schrägflächen aufweisen, welche beim Aufschieben durch Stirnflächen des Mantelgehäuseteiles beaufschlagbar und dadurch federnd zurückstellbar sind.

Der vorliegenden Erfindung liegt die Aufgabe zugrunde, bei geringem fertigungstechnischen Aufwand einen Elektromotor der gattungsgemäßen Art, insbesondere einen Außenläufermotor, zu schaffen, der eine einfach herzustellende und optimal isolierte, komplette Anschlußverdrahtung und eine sichere und stabile Motorbefestigung gestattet.

Erfindungsgemäß wird diese Aufgabe dadurch gelöst, daß die Geräteeinheit, zweiteilig ausgebildet ist, wobei sie aus einem auf den Stator aufrastbaren Flanschteil und aus einer über die Steckerverbindungen die elektrischen Anschlüsse der Wicklungen des Stators kontaktierenden Schaltscheibe besteht.

Durch eine Geräteeinheit gemäß der Erfindung, die auch als Anschlußeinheit bezeichnet werden könnte, kann für einen Elektromotor ein komplett verdrahteter elektrischer Anschluß hergestellt werden, der bei einfacher Montage ohne Zusatzteile nachträglich auf eine aus Rotor und Stator bestehende Motoreinheit aufgesetzt werden kann. Die mit einem Anschlußkabel versehene Anschlußeinheit kann an einem Fertigungsstandort komplett montiert und geprüft werden, während dies für die Motoreinheit an einem anderen Standort möglich ist. Für die Verbindung der verschiedenen Einheiten kann vorteilhafterweise ein Stecksystem, bei dem vorzugsweise im Stator für den Drahtanschluß Schneidklemmkontakte, und in der Anschlußeinheit Flachstecker, verwendet werden, Verwendung.finden.

Jedem Teil der Geräteeinheit kommt dabei mit Vorteil eine spezifische Funktion zu: Während von der Schaltscheibe, die von dem Flanschteil isolierend und schützend überdeckt sein kann, die elektrische Anschlußfunktion erfüllt wird, kann das leicht auf eine Rotor-Stator-Einheit aufclipsbare Flanschteil, das wahlweise aus Kunststoff bestehen kann, über Dome am Stator die Befestigungsfunktion für den Elektromotor übernehmen. Ein weiterer Vorteil der Erfindung besteht dabei darin, daß die Geräteeinheit es für eine stabile betriebs- und insbesondere vibrationssichere Befestigung des erfindungsgemäßen Elektromotors auch zuläßt, daß sich im Grundkörper des Stators Kernbohrungen befinden, die zur Verschraubung des Motors, z.B. mittels kunststofformender Schrauben als Befestigungsmittel, dienen können. Hierdurch kann einerseits ein optimaler Anpreßdruck vom Stator auf den Flansch erzeugt werden, andererseits ist in idealer Weise ein direkter Kraftfluß von einer Anschraubebene in das Lagersystem der Motoreinheit gegeben.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: eine perspektivische Explosionsdarstellung eines erfindungsgemäßen Elektromotors, einschließlich seiner Anschlußleitung,
- Fig. 2: eine perspektivische Draufsicht auf den in Fig. 1 dargestellten Stator des erfindungsgemäßen Elektromotors,
- Fig. 3: eine perspektivische Unteransicht des in Fig. 1 dargestellten Flanschteils des erfindungsgemäßen Elektromotors,
- Fig. 4: eine perspektivische Draufsicht auf die in Fig. 1 dargestellte Schaltscheibe des erfindungsgemäßen Elektromotors,
- Fig. 5: aus anderer Blickrichtung als in Fig. 3 und 4, eine perspektivische Unteransicht einer montierten Geräteeinheit aus der in Fig. 1 und 4 dargestellten Schaltscheibe und aus dem in Fig. 1 und 3 dargestellten Flanschteil des erfindungsgemäßen Elektromotors,
- Fig. 6: einen Längsschnitt durch den in Fig. 1 dargestellten erfindungsgemäßen Elektromotor im Montagezustand.

In den verschiedenen Figuren der Zeichnung sind gleiche Teile stets mit den gleichen Bezugszeichen versehen und werden daher in der Regel jeweils nur einmal beschrieben.

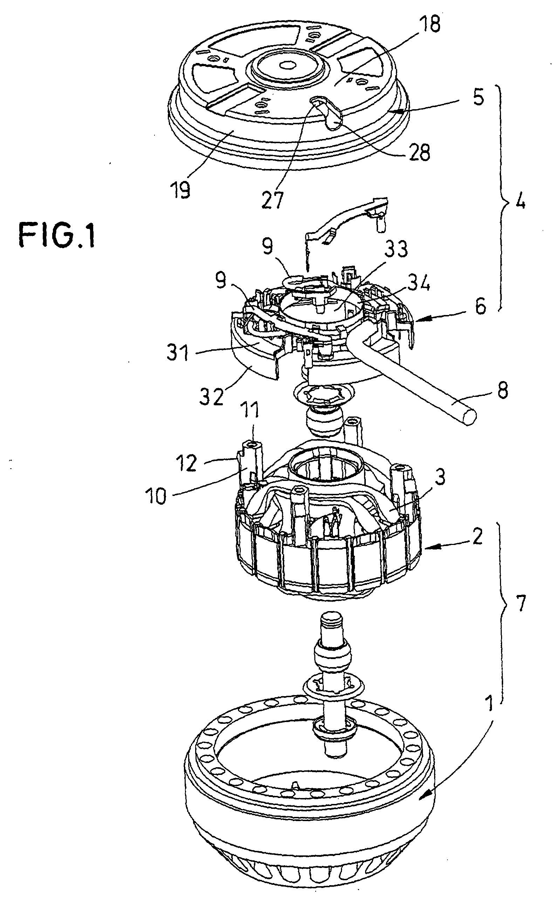

Wie zunächst Fig. 1 veranschaulicht, weist ein erfindungsgemäßer Elektromotor, insbesondere ein Außenläufermotor, einen Rotor 1, einen Stator 2 und eine, über nachstehend genauer beschriebene Steckerverbindungen elektrische Anschlüsse von Wicklungen 3 des Stators 2 kontaktierende Geräteeinheit 4 auf, welche an einer Frontseite des Elektromotors über ebenfalls nachstehend genauer beschriebene Rastverbindungen befestigbar ist.

Die Geräteeinheit 4, die auch als Anschlußeinheit bezeichnet werden könnte, ist zweiteilig ausgebildet und besteht aus einem auf den Stator 2 aufrastbaren Flanschteil 5 und aus einer über die Steckerverbindungen die elektrischen Anschlüsse der Wicklungen 3 des Stators 2 kontaktierenden Schaltscheibe 6.

Rotor 1 und Stator 2 - einschließlich weiterer, in der Zeichnung nicht genauer bezeichneter Teile, wie einer Tragachse oder Tragwelle - können zu einer anderen, zweiten Geräteeinheit zusammengefaßt werden, die als Motoreinheit 7 bezeichnet werden könnte.

In Fig. 1 ist des weiteren ein Motoranschlußkabel 8 deutlich zu sehen, mit dessen elektrischen Leitungen 9 die Schaltscheibe 6 verdrahtet ist. Außerdem ist Fig. 1 in leicht erkennbarer Weise zu entnehmen, daß der Stator 2 von seiner Stirnseite abragende Befestigungsdome 10 mit jeweils einer von einer Stirnseite des Befestigungsdomes 10 ausgehenden Kernbohrung 11 aufweist.

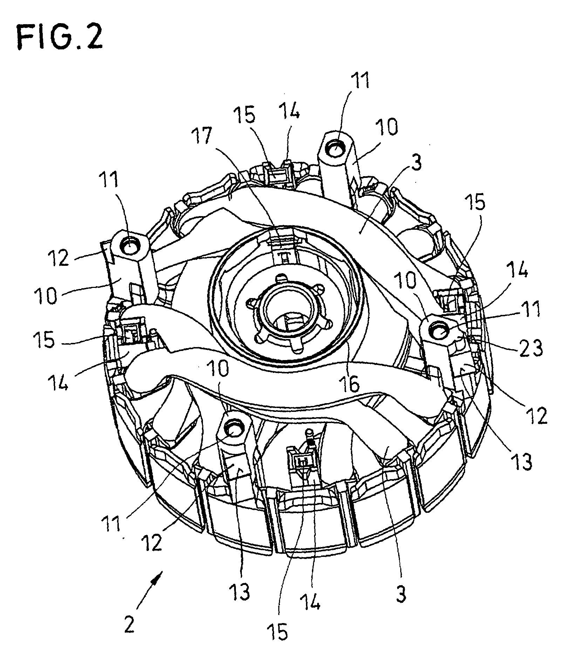

In Fig. 2 ist der Stator 2 in Einzeldarstellung zu sehen. Daraus geht hervor, daß zur Herstellung der Rastverbindungen mit der Geräteeinheit 4, insbesondere mit deren Flanschteil 5, am (nicht näher bezeichneten) vorzugsweise aus Kunststoff bestehenden Grundkörper des Stators 2 Rastelemente 12 ausgebildet sind. Die Rastelemente 12 sind an den Befestigungsdomen 10 ausgebildet, insbesondere einstückig an die Befestigungsdome 10 angeformt. Bei den Rastelementen 12 handelt es sich in der dargestellten bevorzugten Ausführung um im wesentlichen starre Rasthaken, die an ihren freien Kopfenden Schrägflächen 13 aufweisen, welche zur Herstellung der Rastverbindung komplementäre (nachstehend näher beschriebene) Rastelemente federnd verformen. Auf die Rasthaken kann das Flanschteil 5 in montagetechnisch einfacher Weise aufgeclipst werden. Zusätzlich ist der Stator 2, z.B. mittels kunststoffformender Schrauben als Befestigungsmittel, welche in die, vorzugsweise zunächst gewindelosen Kernbohrungen 11 der Befestigungsdome 10 eingedreht werden, an dem das Flanschteil 5 und an einer Befestigungsebene für den erfindungsgemäßen Elektromotor, wie einer Wand, einem Gerätegehäuse oder dergleichen, befestigbar.

Die elektrischen Anschlüsse der Wicklungen 3 des Stators 2 können vornehmlich - wie dargestellt - als in Steckbuchsen 14 angeordnete Steckverbinderelemente 15 ausgeführt sein. Dies betrifft auch einen Anschluß für eine Erdleitung des Stators 2, der als insbesondere innerhalb eines Stirnisolationsschaftes 16 des Stators 2 angeordnetes Steckverbinderelement 17 ausgeführt sein kann.

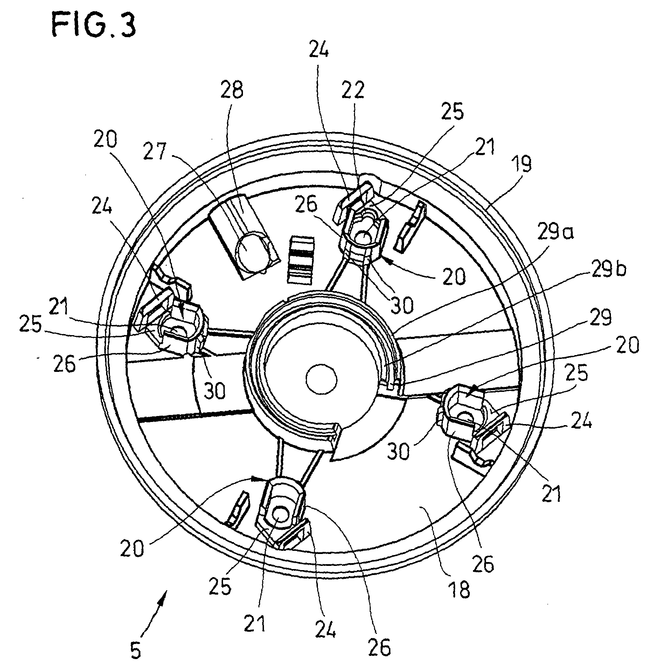

In Fig. 3 ist das Flanschteil 5 in Einzeldarstellung zu sehen. Das Flanschteil 5 kann, wie die zeichnerische Darstellung zeigt, insbesondere topfförmig, mit einem im wesentlichen flachen oder leicht gewölbten Boden 18 und mit einem im wesentlichen senkrecht vom Boden 18 abragenden, im wesentlichen zylindrischen Wandungssteg 19 ausgebildet sein und aus Kunststoff bestehen. Das Flanschteil 5 dient der Abdeckung der Schaltscheibe 6 und kann in seiner Ausführung an Kundenbedürfnisse adaptiert werden.

Innerhalb des vom Wandungssteg 19 umfaßten Bereiches kann das Flanschteil 5 mit Vorteil vom Boden 18 abragende, insbesondere einstückig mit dem Boden 18 ausgebildete, Aufnahmehülsen 20 für die Befestigungsdome 10 des Stators 2 aufweisen, innerhalb derer sich im Boden Durchtrittsöffnungen 21 für die Befestigungsmittel befinden.

An mindestens einer Aufnahmehülse 20 kann sich - wie dargestellt - eine Codiernut 22 befinden, deren formschlüssig passendes Gegenstück sich als Codiernase 23 an einem Befestigungsdom 10 des Stators 2 (Fig.2) befinden kann. Mittels der Codierelemente (Nut 22 und Nase 23) ist bei der Montage, insbesondere bei dem zunächst erfolgenden Miteinanderverrasten der Teile, eine einfache lageeindeutige Zuordnung von Flanschteil 5 und Stator 2 möglich.

Die den Rasthaken am Stator 2 komplementären Rastelemente 24 des Flanschteils 5 sind in der dargestellten Ausführung bevorzugt als federnde, insbesondere einstückig an den Boden 18 steigbügelartig angeformte Raststege ausgebildet. Dabei ist es montagetechnisch von Vorteil, wenn das Flanschteil 5 Anschlagflächen 25 für die Rastelemente 12 des Stators 2 aufweist, die sich bevorzugt im Bereich einer (nicht näher bezeichneten) seitlichen Öffnung der Wand 26 der Aufnahmehülsen 20 befinden können.

Weiterhin kann vorteilhafterweise vorgesehen sein, daß sich der Querschnitt der Aufnahmehülsen 20 in Richtung auf den Boden 18 hin verjüngt. Dadurch ist bei der Montage ein einfaches und sicheres Ansetzen des Flanschteiles 5 an den Stator 2 gewährleistet.

Insbesondere in seinem Boden 18 kann das Flanschteil 5 eine Durchtrittsöffnung 27 für das Motoranschlußkabel 8 aufweisen. Dabei kann, wie Fig. 3 von der Unterseite her und Fig. 1 von der Oberseite her zeigen, im Flanschteil 5 ein vom Wandungssteg 19 ausgehender im Boden 18 radial nach innen zur Durchtrittsöffnung 27 für das Motoranschlußkabel 8 verlaufender Kabelkanal 28 ausgebildet sein, in den sich das Motoranschlußkabel bündig mit der Oberfläche, insbesondere des Bodens 18, des Flanschteils 5 einschmiegen kann.

Das Flanschteil 5 kann des weiteren zur Stabilitätserhöhung der Verbindung der Anschlußeinheit 4 mit der Motoreinheit 7 im oder am Boden 18 eine ringförmige, insbesondere durch zwei koaxiale vom Boden 18 abragende Ringstege 29a, 29b gebildete, Nut 29 zur formschlüssigen Aufnahme des Stirnisolationsschaftes 16 des Stators 2 aufweisen.

Zum Zwecke der separaten Herstellung und Lagerung sowie des Transportes der Anschlußgeräteeinheit 4 ist es von Vorteil, wenn auch das Flanschteil 5 mit der Schaltscheibe 6 ausreichend fest verbunden werden kann. Dies ist insbesondere über eine Rastverbindung möglich. Wie Fig. 3 zeigt, weist das Flanschteil 5 daher in der dargestellten Ausführung Rastelemente 30, insbesondere an der Wand 26 der Aufnahmehülsen 20 angeordnete Raststege oder Rastfenster, auf, die zur Verrastung mit der Schaltscheibe 6 dienen.

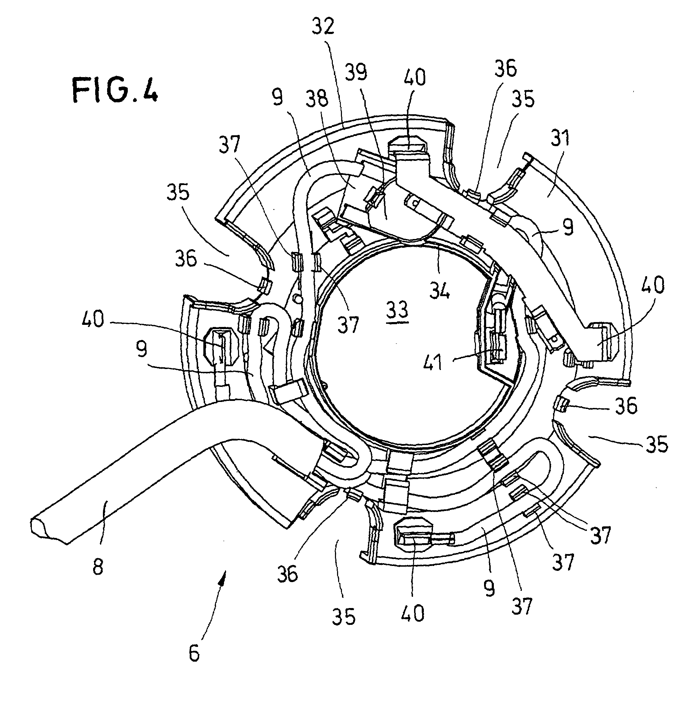

In Fig. 4 ist die Schaltscheibe 6 in Einzeldarstellung zu sehen. Die Schaltscheibe 6 weist eine ringförmige Grundgestalt, mit einem im wesentlichen flachen oder leicht gewölbten Boden 31, mit einem im wesentlichen senkrecht vom Boden 31 abragenden, im wesentlichen zylindrischen Wandungssteg 32 und mit einer zentrischen Durchtrittsöffnung 33 für den Stirnisolationsschaft 16 des Stators 2 auf. Die zentrische Durchtrittsöffnung 33 umgreifend ist an der Schaltscheibe 6 ein vom Boden 31 abragender Ringsteg 34 vorgesehen, der formschlüssig an die Außenkontur der Nut 29 des Flanschteiles 5 (vgl. Fig. 3) zur Aufnahme des Stirnisolationsschaftes 16 des Stators 2 (vgl. Fig. 2) angepaßt ist. Dies fördert eine stabile und kompakte Bauweise des erfindungsgemäßen Elektromotors, die sich des weiteren auch darin ausdrückt, daß die Schaltscheibe 6 von ihrem Umfang ausgehende, im wesentlichen radial verlaufende, insbesondere in ihrer Form an die Außenkontur der Aufnahmehülsen 20 des Flanschteiles 5 angepaßte Ausnehmungen 35 aufweist.

Zur Verbindung mit dem Flanschteil 5 sind an der Schaltscheibe 6 den Rastelementen 30 des Flanschteils 5 komplementäre Rastelemente 36, insbesondere im Bereich der Ausnehmungen 35 an ihrem Boden 31 angeordnete Rastnasen, angeordnet.

Auf ihrer Oberseite, d.h. auf ihrer im Montagezustand dem Stator 2 abgewandten Seite kann die Schaltscheibe 6 für eine sichere Befestigung Klemmstege 37 für die elektrischen Leitungen 9 des Motoranschlußkabels 8 aufweisen.

Außerdem kann vorgesehen sein, daß die Schaltscheibe 6 auf ihrer im Montagezustand dem Stator 2 abgewandten Seite eine Aufnahme 38 für einen Temperaturwächter 39 aufweist.

Was die Herstellung der elektrischen Verbindungen mit den Anschlüssen der Wicklungen 3 des Stators 2 betrifft, so kann die Schaltscheibe 6, insbesondere im umfangsnahen Bereich ihres Bodens 31, (nicht näher bezeichnete) Durchtrittsöffnungen oder Befestigungselemente für Stecker 40, insbesondere zum Einsetzen eines Flachsteckers, aufweisen.

Des weiteren kann die Schaltscheibe 6, insbesondere im Bereich des inneren Randes (Randsteg 34) ihres Bodens 31, eine Durchtrittsöffnung oder ein Befestigungselement für einen Stecker 41, insbesondere zum Einsetzen eines Flachsteckers, zur Herstellung einer Steckverbindung mit dem elektrischen Anschluß der Erdleitung des Stators 2 aufweisen. Die Ausführung der Stecker 40, 41, in denen die Enden der Leitungen 9 des Motoranschlußkabels 8 angeschlossen sind, als Flachstecker und der korrespondierenden Kontakte des Stators 2 als Steckverbinderelemente 15, 17 gewährleisten eine gute Automatisierbarkeit der Endmontage des erfindungsgemäßen Elektromotors.

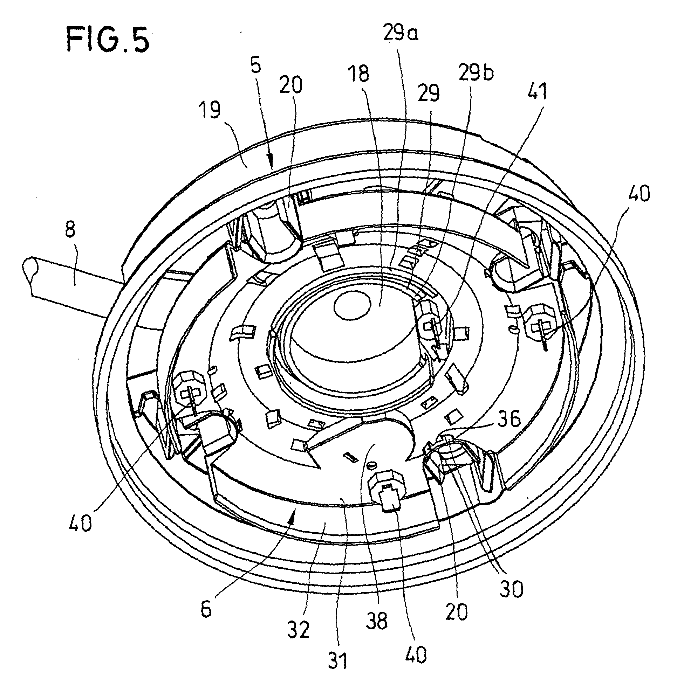

In Fig. 5 ist die aus Flanschteil 5 und aus Schaltscheibe 6 bestehende Geräteeinheit 4 im Zusammenbau, d.h. bei miteinander verrasteten Zustand von Flanschteil 5 und Schaltscheibe 6, zu sehen. Das Motoranschlußkabel 8 ist dabei durch die Durchtrittsöffnung 27 des Flanschteils 5 für das Kabel 8 gezogen und in den dafür vorgesehenen Kabelkanal 28 eingelegt. Die Ansicht zeigt die die Ausnehmungen 35 in der Schaltscheibe 6 durchragenden Aufnahmehülsen 20 des Flanschteiles 5, die miteinander verrasteten einander komplementären (korrespondierenden) Rastelemente 30, 36 von Flanschteil 5 und Schaltscheibe 6 sowie die Unterseite der Aufnahme 38 für den Temperaturwächter 39 in der Schaltscheibe 6 und die Unterseite der statorseitig aus der Schaltscheibe 6 herausragenden Stecker 40, 41.

Wie die zeichnerische Darstellung zeigt, kann der Stecker 41 zur Herstellung der Steckverbindung mit dem elektrischen Anschluß der Erdleitung des Stators 2 dabei vorzüglich im Bereich der Verlaufslinie der Nut 29 des Flanschteils 5 zur formschlüssigen Aufnahme des Stirnisolationsschaftes 16 des Stators 2 angeordnet sein, wobei aber die Nut 29 in Bereich des Steckers 41 unterbrochen ist. Auch dies gewährleistet vorteilhafterweise (neben der Durchführung des Motoranschlußkabels 8 durch die Durchtrittsöffnung 27 des Flanschteils 5) eine Codierung, d.h. eine einfache lagerichtige Zuordnung von Flanschteil 5 und Schaltscheibe 6 beim Zusammenbau und (neben dem formschlüssigen Ineinandergreifen von Aufnahmehülsen 20 und Ausnehmungen 35) einen gegen Verdrehung gesicherten Sitz des Flanschteils 5 auf der Schaltscheibe 6.

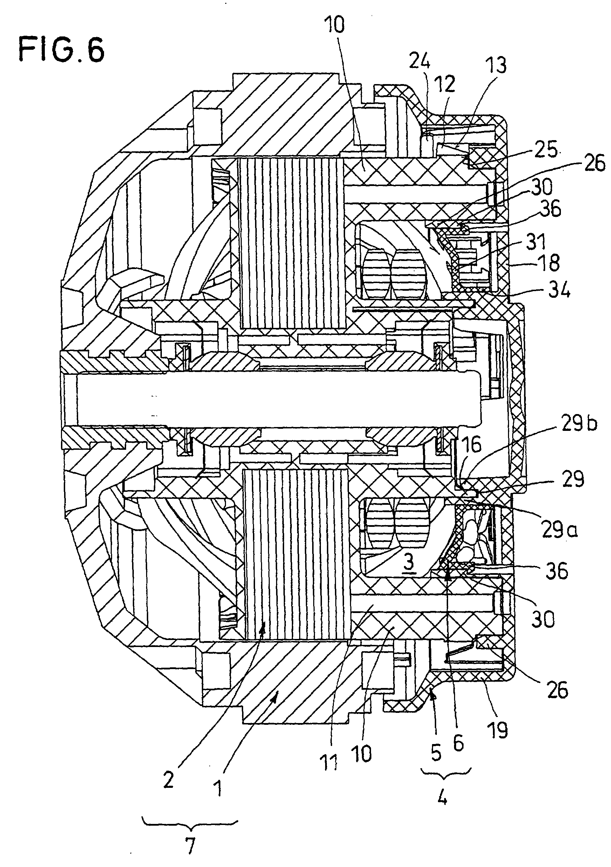

In Fig. 6 ist schließlich - wie bereits erwähnt - ein Längsschnitt durch den gesamten fertig montierten erfindungsgemäßen Elektromotor dargestellt. Durch die Erfindung kann kostengünstig eine gute Verbindung zwischen der Motoreinheit 7 und der Anschlußeinheit 4 realisiert werden, ohne daß dazu ein weiteres Schrauben, Pressen etc. notwendig wäre. Es kann somit kostenoptimiert ein nachträglicher Anschluß der Motoreinheit 7 realisiert werden, um die Vorteile von verschiedenen Produktionsstandorten, sowie einer Optimierung der Fertigungslinie nutzen zu können.

Im fertig montierten Elektromotor liegen die Rastverbindungen des Anschlußeinheit 4 vor, wie sie vorstehend unter Bezugnahme auf Fig. 5 erläutert wurden. Dazu kommen die Rastverbindungen zwischen dem Flanschteil 5 und dem Stator 2. In oberen Teil der zeichnerischen Darstellung sind diesbezüglich einerseits die Rastelemente 12 am Befestigungsdom 10 des Stators 2 und andererseits die dazu komplementären Rastelemente 24 am Flanschteil 5 erkennbar, die miteinander verrastet sind. Die Verrastung vollzieht sich, indem die Rastelemente 12 des Stators 2 beim Aufstecken der Anschlußgeräteeinheit 4 auf die Motoreinheit 7 die Rastelemente 24 des Flanschteils 5 zunächst mittels der Schrägflächen 13 elastisch federnd verformen und danach unter Ausbildung einer Rasthaken-Raststeg-Verbindung hintergreifen. Die Rastelemente 12 des Stators 2 kommen dabei kopfseitig - wie ebenfalls Fig. 6 zu entnehmen ist - an der dafür vorgesehenen Anschlagfläche 25 des Flanschteils 5 zur Anlage. Sämtliche Rastverbindungen sind so dimensioniert, daß der montierte Motor gut handhabbar ist.

Der Stirnisolationsschaft 16 des Stators 2 greift im montierten Zustand in die korrespondierende Nut 29 des Flanschteils 5 ein.

Die Befestigungsdome 10 mit ihren Kernbohrungen 11 gestatten es, wie bereits beschrieben, den erfindungsgemäßen Elektromotor als Ganzes in gewünschter Weise an einer Montageebene zu verschrauben.

Die Erfindung ist nicht auf das dargestellte Ausführungsbeispiel beschränkt, sondern umfaßt auch alle im Sinne der Erfindung gleichwirkenden Ausführungen, beispielsweise können, um einen sicheren Zusammenhalt zu gewährleisten, die Geräteeinheit 4 und die Motoreinheit 7 in sich und/oder auch untereinander bedarfsweise über verschiedene weitere geeignete Verbindungstechniken zusätzlich oder alternativ verbunden werden.

### Bezugszeichen

- 1: Rotor
- 2: Stator
- 3: Wicklung von 2
- 4: (Anschluß-)Geräteeinheit aus 5 und 6
- 5: Flanschteil von 4
- 6: Schaltscheibe von 4
- 7: Motoreinheit aus 1 und 2
- 8: Motoranschlußkabel
- 9: Leitungen von 8
- 10: Befestigungsdome von 2
- 11: Kernbohrung in 10
- 12: Rastelemente an 2 für 5
- 13: Schrägflächen an 12
- 14: Steckbuchse für 15
- 15: Steckverbinderelement für 40
- 16: Stirnisolationsschaft von 2
- 17: Steckverbinderelement für 41
- 18: Boden von 5
- 19: Wandungssteg von 5
- 20: Aufnahmehülsen an 18 für 10
- 21: Schrauböffnung
- 22: Codiernut in 20
- 23: Codiernase an 10
- 24: Rastelemente von 5 für 2
- 25: Anschlagfläche von 5 für 12
- 26: Wand von 20
- 27: Durchtrittsöffnung in 5 für 8
- 28: Kabelkanal in 5 für 8
- 29: Nut von 18
- 29a, 29b: Ringstege zur Bildung von 29
- 30: Rastelemente von 5 für 6
- 31: Boden von 6
- 32: Wandungssteg von 6
- 33: Durchtrittsöffnung für 16 in 31
- 34: Ringsteg um 33
- 35: Ausnehmungen in 31
- 36: Rastelemente von 6 für 5
- 37: Klemmstege für 9 an 6
- 38: Aufnahme in 31 für 39
- 39: Temperaturwächter
- 40: Stecker für 9
- 41: Stecker für Erdleitung

## Patentansprüche

1. Elektromotor, insbesondere Außenläufermotor, mit einem Rotor (1), mit einem Stator (2) und mit einer über Steckerverbindungen (40, 41, 15, 17) elektrische Anschlüsse von Wicklungen (3) des Stators (2) kontaktierenden Geräteeinheit (4), welche an einer Frontseite des Elektromotors über Rastverbindungen, die aus einander korrespondierenden Rastelementen (12, 24) gebildet sind, befestigbar ist,
**dadurch gekennzeichnet, daß** die Geräteeinheit (4), zweiteilig ausgebildet ist, wobei sie aus einem auf den Stator (2) aufrastbaren Flanschteil (5) und aus einer über die Steckerverbindungen (40, 41, 15, 17) die elektrischen Anschlüsse der Wicklungen (3) des Stators (2) kontaktierenden Schaltscheibe (6) besteht.

2. Elektromotor nach Anspruch 1,
**dadurch gekennzeichnet, daß** der Stator (2) von seiner Stirnseite abragende Befestigungsdome (10) mit jeweils einer von einer Stirnseite des Befestigungsdomes (10) ausgehenden Kernbohrung (11) aufweist.

3. Elektromotor nach Anspruch 1 oder 2,
**dadurch gekennzeichnet, daß** zur Herstellung der Rastverbindungen die Rastelemente (12) einerseits am Grundkörper des Stators (2) ausgebildet sind.

4. Elektromotor nach Anspruch 2 und 3,
**dadurch gekennzeichnet, daß** die Rastelemente (12) am Grundkörper des Stators (2) an dessen Befestigungsdomen (10) ausgebildet, insbesondere einstückig an die Befestigungsdome (10) angeformt, sind.

5. Elektromotor nach einem der Ansprüche 1 bis 4,
**dadurch gekennzeichnet, daß** die Rastelemente (12) statorseitig als im wesentlichen starre Rasthaken ausgebildet sind, die an ihren freien Kopfenden Schrägflächen (13) aufweisen, welche zur Herstellung der Rastverbindung komplementäre Rastelemente (24) federnd verformen.

6. Elektromotor nach einem der Ansprüche 1 bis 5,
**dadurch gekennzeichnet, daß** das Flanschteil (5) topfförmig, mit einem im wesentlichen flachen oder leicht gewölbten Boden (18) und mit einem im wesentlichen senkrecht vom Boden (18) abragenden, im wesentlichen zylindrischen Wandungssteg (19) ausgebildet ist.

7. Elektromotor nach einem der Ansprüche 1 bis 6,
**dadurch gekennzeichnet, daß** die Rastelemente am Flanschteil (5) als federnde, insbesondere einstückig mit dem Boden (18) ausgeführte, vorzugsweise an den Boden (18) angeformte Raststege ausgebildet sind.

8. Elektromotor nach Anspruch 2 und 7,
**dadurch gekennzeichnet, daß** das Flanschteil (5) innerhalb des vom Wandungssteg (19) umfaßten Bereiches vom Boden (18) abragende, insbesondere einstückig mit dem Boden (18) ausgebildete, Aufnahmehülsen (20) für die Befestigungsdome (10) des Stators (2) aufweist, innerhalb derer sich im Boden (18) Durchtrittsöffnungen (21) für Befestigungsmittel befinden.

9. Elektromotor nach Anspruch 8,
**dadurch gekennzeichnet, daß** an mindestens einem Befestigungsdom (10) und an mindestens einer Aufnahmehülse (20) formschlüssig einander entsprechende Codierelemente (22, 23), wie eine Codiernase (23) und eine Codiernut (22), angeordnet sind.

10. Elektromotor nach Anspruch 3 und Anspruch 8 oder 9,
**dadurch gekennzeichnet, daß** die Aufnahmehülsen (20) im Bereich einer seitlichen Öffnung ihrer Wand (26) Anschlagflächen (25) für die Rastelemente (12) des Stators (2) aufweisen.

11. Elektromotor nach einem der Ansprüche 8 bis 10,
**dadurch gekennzeichnet, daß** sich der Querschnitt der Aufnahmehülsen (20) in Richtung auf den Boden (18) des Flanschteils (5) hin verjüngt.

12. Elektromotor nach einem der Ansprüche 1 bis 11,
**dadurch gekennzeichnet, daß** der Stator (2) einen aus Kunststoff bestehenden Grundkörper aufweist, an dem das Flanschteil (5) mittels kunststoffformender Schrauben als Befestigungsmittel befestigbar ist.

13. Elektromotor nach einem der Ansprüche 1 bis 12,
**dadurch gekennzeichnet, daß** das Flanschteil (5), insbesondere im Boden (18), eine Durchtrittsöffnung (27) für ein Motoranschlußkabel (8) aufweist.

14. Elektromotor nach Anspruch 13,
**dadurch gekennzeichnet, daß** im Flanschteil (5) ein vom Wandungssteg (19) ausgehender im Boden (18) radial nach innen zur Durchtrittsöffnung (27) für das Motoranschlußkabel (8) verlaufender Kabelkanal (28) ausgebildet ist.

15. Elektromotor nach einem der Ansprüche 1 bis 14,
**dadurch gekennzeichnet, daß** das Flanschteil (5) im Boden (18) eine ringförmige, insbesondere durch zwei koaxiale vom Boden (18) abragende Ringstege (29a, 29b) gebildete, Nut (29) zur formschlüssigen Aufnahme eines Stirnisolationsschaftes (16) des Stators (2) aufweist.

16. Elektromotor nach einem der Ansprüche 1 bis 15,
**dadurch gekennzeichnet, daß** das Flanschteil (5) Rastelemente (30), insbesondere an den Aufnahmehülsen (20) angeordnete Raststege, zur Verrastung mit der Schaltscheibe (6) aufweist.

17. Elektromotor nach einem der Ansprüche 1 bis 16,
**dadurch gekennzeichnet, daß** die Schaltscheibe (6) eine ringförmige Grundgestalt, mit einem im wesentlichen flachen oder leicht gewölbten Boden (31), mit einem im wesentlichen senkrecht vom Boden (31) abragenden, im wesentlichen zylindrischen Wandungssteg (32) und mit einer zentrischen Durchtrittsöffnung (33) für einen/den Stirnisolationsschaft (16) des Stators (2) aufweist.

18. Elektromotor nach Anspruch 17,
**dadurch gekennzeichnet, daß** die Schaltscheibe (6) einen vom Boden (31) abragenden, die zentrische Durchtrittsöffnung (33) umgebenden Ringsteg (34) aufweist, der insbesondere formschlüssig an eine Außenkontur der Nut (29) des Flanschteiles (5) zur Aufnahme des Stirnisolationsschaftes (16) des Stators (2) angepaßt ist.

19. Elektromotor nach einem der Ansprüche 1 bis 18,
**dadurch gekennzeichnet, daß** die Schaltscheibe (6) von ihrem Umfang ausgehende, im wesentlichen radial verlaufende, insbesondere an die Außenkontur der Aufnahmehülsen (20) des Flanschteiles (5) angepaßte, Ausnehmungen (35) aufweist.

20. Elektromotor nach einem der Ansprüche 1 bis 19,
**dadurch gekennzeichnet, daß** die Schaltscheibe (6) Rastelemente (36), insbesondere im Bereich der Ausnehmungen (35) an ihrem Boden (31) angeordnete Rasthaken, zur Verrastung mit dem Flanschteil (5) aufweist.

21. Elektromotor nach einem der Ansprüche 1 bis 20,
**dadurch gekennzeichnet, daß** die Schaltscheibe (6) auf ihrer im Montagezustand dem Stator (2) abgewandten Seite Klemmstege (37) für elektrische Leitungen, insbesondere für die elektrischen Leitungen (9) eines/des Motoranschlußkabels (8), aufweist.

22. Elektromotor nach einem der Ansprüche 1 bis 21,
**dadurch gekennzeichnet, daß** die Schaltscheibe (6) auf ihrer im Montagezustand dem Stator (2) abgewandten Seite eine Aufnahme (38) für einen Temperaturwächter (39) aufweist.

23. Elektromotor nach einem der Ansprüche 1 bis 21,
**dadurch gekennzeichnet, daß** die Schaltscheibe (6), insbesondere im umfangsnahen Bereich ihres Bodens (31), Durchtrittsöffnungen oder Befestigungselemente für Stecker (40), insbesondere für Flachstecker, zur Herstellung der Steckverbindungen mit den elektrische Anschlüssen der Wicklungen (3) des Stators (2) aufweist.

24. Elektromotor nach einem der Ansprüche 1 bis 23,
**dadurch gekennzeichnet, daß** die Schaltscheibe (6), insbesondere im Bereich des inneren Randes ihres Bodens (31), eine Durchtrittsöffnung oder ein Befestigungselement für einen Stecker (41), insbesondere für einen Flachstecker, zur Herstellung einer Steckverbindung mit dem elektrischen Anschluß einer Erdleitung des Stators (2) aufweist.

25. Elektromotor nach Anspruch 15 und 24,
**dadurch gekennzeichnet, daß** in der aus Flanschteil (5) und Schaltscheibe (6) bestehenden Geräteeinheit (4) der Stecker (41) zur Herstellung der Steckverbindung mit dem elektrischen Anschluß der Erdleitung des Stators (2) im Bereich der Verlaufslinie der Nut (29) des Flanschteiles (5) zur formschlüssigen Aufnahme des Stirnisolationsschaftes des Stators (2) angeordnet ist, wobei die Nut (29) in Bereich des Stekkers (41) unterbrochen ist.

26. Elektromotor nach einem der Ansprüche 1 bis 25,
**dadurch gekennzeichnet, daß** die elektrischen Anschlüsse der Wicklungen (3) des Stators (2) als in Steckbuchsen (14) angeordnete Steckverbinderelemente (15) ausgeführt sind.

27. Elektromotor nach einem der Ansprüche 1 bis 26,
**dadurch gekennzeichnet, daß** am Stator (2) ein Anschluß für eine/die Erdleitung als insbesondere innerhalb eines/des Stirnisolationsschaftes (16) des Stators (2) angeordnetes Steckverbinderelement (17) ausgeführt ist.

## Claims

1. Electric motor, in particular an external-rotor motor, with a rotor (1), with a stator (2) and with a device unit (4) which contacts electrical terminals of windings (3) of the stator (2) via plug-in connections (40, 41, 15, 17) and can be attached to a front side of the electric motor by means of latching connections which are formed by latching elements (12, 24) corresponding to one other, **characterized in that** the device unit (4) is of a two-part design, it comprising a flange part (5) which can be mounted in a latching manner on the stator (2) and comprising a switching disc (6) which contacts the electrical terminals of the windings (3) of the stator (2) via the plug-in connections (40, 41, 15, 17).

2. Electric motor according to Claim 1, **characterized in that** the stator (2) has fastening domes (10) protruding from its end face, with in each case a core bore (11) extending from an end face of the fastening dome (10).

3. Electric motor according to Claim 1 or 2, **characterized in that**, to establish the latching connections, the latching elements (12) are formed on one side on the basic body of the stator (2).

4. Electric motor according to Claims 2 and 3, **characterized in that** the latching elements (12) are formed on the basic body of the stator (2) at the fastening domes (10) of the latter, in particular are integrally formed on the fastening domes (10).

5. Electric motor according to one of Claims 1 to 4, **characterized in that** the latching elements (12) are formed on the stator side as substantially rigid latching hooks, which have at their free head ends sloping faces (13) which resiliently deform complementary latching elements (24) to establish the latching connection.

6. Electric motor according to one of Claims 1 to 5, **characterized in that** the flange part (5) is formed in a pot-shaped manner, with a substantially flat or slightly domed base (18) and with a substantially cylindrical wall web (19), protruding substantially perpendicularly from the base (18).

7. Electric motor according to one of Claims 1 to 6, **characterized in that** the latching elements are formed on the flange part (5) as resilient latching webs, in particular integrally formed with the base (18), preferably formed onto the base (18).

8. Electric motor according to Claims 2 and 7, **characterized in that** the flange part (5) has within the region enclosed by the wall (19) receiving sleeves (20) which protrude from the base (18), in particular are integrally formed with the base (18), for the fastening domes (10) of the stator (2), within which there are in the base (18) through-openings (21) for fastening means.

9. Electric motor according to Claim 8, **characterized in that** coding elements (22, 23) corresponding to one another with positive engagement, such as a coding lug (23) and a coding groove (22), are arranged on at least one fastening dome (10) and on at least one receiving sleeve (20).

10. Electric motor according to Claim 3 and Claim 8 or 9, **characterized in that** the receiving sleeves (20) have in the region of a lateral opening in their wall (26) stop faces (25) for the latching elements (12) of the stator (2).

11. Electric motor according to one of Claims 8 to 10, **characterized in that** the cross section of the receiving sleeves (20) tapers in the direction of the base (18) of the flange part (5).

12. Electric motor according to one of Claims 1 to 11, **characterized in that** the stator (2) has a basic body consisting of plastic, to which the flange part (5) can be fastened by means of plastic-forming screws as fastening means.

13. Electric motor according to one of Claims 1 to 12, **characterized in that** the flange part (5) has, in particular in the base (18), a through-opening (27) for a motor connection cable (8).

14. Electric motor according to Claim 13, **characterized in that** in the flange part (5) there is formed a cable duct (28) extending from the wall web (19) and running radially inwards in the base (18), towards the through-opening (27) for the motor connection cable (8).

15. Electric motor according to one of Claims 1 to 14, **characterized in that** the flange part (5) has in the base (18) an annular groove (29), in particular formed by two coaxial annular webs (29a, 29b) protruding from the base (18), for receiving an end insulating shaft (16) of the stator (2) with positive engagement.

16. Electric motor according to one of Claims 1 to 15, **characterized in that** the flange part (5) has latching elements (30), in particular latching webs arranged on the receiving sleeves (20), for latching engagement with the switching disc (6).

17. Electric motor according to one of Claims 1 to 16, **characterized in that** the switching disc (6) has an annular basic shape, with a substantially flat or slightly domed base (31), with a substantially cylindrical wall web (32) protruding substantially perpendicularly from the base (31) and with a central through-opening (33) for a/the end insulating shaft (16) of the stator (2).

18. Electric motor according to Claim 17, **characterized in that** the switching disc (6) has an annular web (34) which protrudes from the base (31), surrounds the central through-opening (33) and is adapted, in particular with positive engagement, to an outer contour of the groove (29) of the flange part (5) for receiving the end insulating shaft (16) of the stator (2).

19. Electric motor according to one of Claims 1 to 18, **characterized in that** the switching disc (6) has recesses (35) extending from its circumference, running substantially radially and adapted in particular to the outer contour of the receiving sleeves (20) of the flange part (5).

20. Electric motor according to one of Claims 1 to 19, **characterized in that** the switching disc (6) has latching elements (36), in particular latching hooks arranged in the region of the recesses (35) on its base (31), for latching engagement with the flange part (5).

21. Electric motor according to one of Claims 1 to 20, **characterized in that** the switching disc (6) has on its side facing away from the stator (2) in the mounted state clamping webs (37) for electrical lines, in particular for the electrical lines (9) of a/the motor connection cable (8).

22. Electric motor according to one of Claims 1 to 21, **characterized in that** the switching disc (6) has on its side facing away from the stator (2) in the mounted state a receptacle (38) for a temperature monitor (39).

23. Electric motor according to one of Claims 1 to 21, **characterized in that** the switching disc (6) has, in particular in the region of its base (31) that is near the circumference, through-openings or fastening elements for plugs (40), in particular for flat plugs, for establishing the plug-in connections with the electrical terminals of the windings (3) of the stator (2).

24. Electric motor according to one of Claims 1 to 23, **characterized in that** the switching disc (6) has, in particular in the region of the inner rim of its base (31), a through-opening or fastening element for a plug (41), in particular for a flat plug, for establishing a plug-in connection with the electrical terminal of an earth line of the stator (2).

25. Electric motor according to Claims 15 and 24, **characterized in that** in the device unit (4) comprising the flange part (5) and the switching disc (6), the plug (41) for establishing the plug-in connection with the electrical terminal of the earth line of the stator (2) is arranged in the region of the line followed by the groove (29) of the flange part (5) for receiving the end insulating shaft of the stator (2) with positive engagement, the groove (29) being interrupted in the region of the plug (41).

26. Electric motor according to one of Claims 1 to 25, **characterized in that** the electrical terminals of the windings (3) of the stator (2) are formed as plug-in connector elements (15) arranged in plug-in sockets (14).

27. Electric motor according to one of Claims 1 to 26, **characterized in that** a terminal for a/the earth line is formed on the stator (2) as in particular a plug-in connector element (17) arranged within a/the end insulating shaft (16) of the stator (2).

## Revendications

1. Moteur électrique, en particulier moteur à rotor externe, comprenant un rotor (1), un stator (2) et une unité d'appareil (4) qui entre en contact par l'intermédiaire de connexions à broches (40, 41, 15, 17) avec des raccordements électriques d'enroulements (3) du stator (2), et qui peut être fixée à un côté frontal du moteur électrique par l'intermédiaire d'assemblages à encliquetage qui sont formés d'éléments à encliquetage (12, 24) qui se correspondent mutuellement,
**caractérisé en ce que** l'unité d'appareil (4) est réalisée en deux parties, étant composée d'une partie collerette (5) pouvant être encliquetée sur le stator (2) et d'un disque de commande (6) qui entre en contact avec les raccordements électriques des enroulements (3) du stator (2) par l'intermédiaire des connexions à broches (40, 41, 15, 17).

2. Moteur électrique selon la revendication 1,
**caractérisé en ce que** le stator (2) présente des dômes de fixation (10) qui font saillie sur son côté frontal et possèdent chacun un perçage central (11) partant d'un côté frontal du dôme de fixation (10).

3. Moteur électrique selon la revendication 1 ou 2,
**caractérisé en ce que**, pour la production des assemblages à encliquetage, les éléments d'encliquetage (12) sont formés d'un côté sur le corps de base du stator (2).

4. Moteur électrique selon la revendication 2 ou 3,
**caractérisé en ce que** les éléments d'encliquetage (12) sont constitués sur le corps de base du stator (2) sur les dômes de fixation (10) de ce dernier, en particulier formés en une seule pièce sur les dômes de fixation (10)

5. Moteur électrique selon l'une des revendications 1 à 4,
**caractérisé en ce que** les éléments d'encliquetage côté stator (12) sont réalisés sous la forme de crochets d'encliquetage sensiblement rigides qui présentent à leurs extrémités de tête libres des surfaces obliques (13) qui déforment élastiquement des éléments d'encliquetage complémentaires (24) pour la réalisation de l'assemblage à encliquetage.

6. Moteur électrique selon l'une des revendications 1 à 5,
**caractérisé en ce que** la partie collerette (5) est réalisée en forme de godet , avec un fond (18) sensiblement plat ou légèrement bombé et une nervure de paroi (19) sensiblement cylindrique qui fait saillie sensiblement perpendiculairement à partir du fond (18).

7. Moteur électrique selon l'une des revendications 1 à 6,
**caractérisé en ce que** les éléments d'encliquetage sont constitués par des nervures d'encliquetage élastiques, en particulier d'une seule pièce avec le fond (18), de préférence formées sur le fond (18).

8. Moteur électrique selon les revendications 2 et 7,
**caractérisé en ce que** la partie collerette (5) présente, dans la région entourée par la nervure de paroi (19), des douilles réceptrices (20) en saillie à partir du fond (18) et en particulier en une seule pièce avec le fond (18), destinées à recevoir les dômes de fixation (10) du stator (2), à l'intérieur desquelles se trouvent, dans le fond (18) des ouvertures de passage (21) pour des moyens de fixation.

9. Moteur électrique selon la revendication 8,
**caractérisé en ce que**, sur au moins un dôme de fixation (10) et au moins une douille réceptrice (20), sont disposés des éléments de codage (22, 23) qui se correspondent mutuellement avec liaison par complémentarité de forme, comme une dent de codage (23) et une rainure de codage (22).

10. Moteur électrique selon la revendication 3 et la revendication 8 ou 9,
**caractérisé en ce que** les douilles réceptrices (20) présentent, dans la région d'une ouverture latérale de leur paroi (26), des surfaces de butée (25) pour les éléments d'encliquetage (12) du stator (2).

11. Moteur électrique selon l'une des revendications 8 à 10,
**caractérisé en ce que** la section des douilles réceptrices (20) se rétrécit en direction du fond (18) de la partie collerette (5).

12. Moteur électrique selon une des revendications 1 à 11,
**caractérisé en ce que** le stator (2) présente un corps de base composé de matière plastique, auquel la partie collerette (5) peut être fixée à l'aide de vis capables de tarauder les matières plastiques qui servent de moyens de fixation.

13. Moteur électrique selon une des revendications 1 à 12,
**caractérisé en ce que** la partie collerette (5) présente, en particulier dans le fond (18), une ouverture de passage (27) pour un câble de raccordement de moteur (8).

14. Moteur électrique selon la revendication 13,
**caractérisé en ce que**, dans la partie collerette (5), est formée un canal de câble (28) qui part de la nervure de paroi (19) et qui s'étend dans le fond (18) radialement vers l'intérieur jusqu'à l'ouverture de passage (27) pour le câble de raccordement de moteur (8).

15. Moteur électrique selon l'une des revendications 1 à 14,
**caractérisé en ce que** la partie collerette (5) présente dans le fond (18) une rainure annulaire (29), formée en particulier par deux nervures annulaires coaxiales (29a, 29b) qui font saillie à partir du fond (18) pour recevoir avec liaison par complémentarité de forme une tige isolante frontale (16) du stator (2).

16. Moteur électrique selon l'une des revendications 1 à 15,
**caractérisé en ce que** la partie collerette (5) présente des éléments d'encliquetage (30), en particulier des nervures d'encliquetage, disposées sur les douilles réceptrices (20), pour s'encliqueter avec le disque de commande (6).

17. Moteur électrique selon une des revendications 1 à 16,
**caractérisé en ce que** le disque de commande (6) présente une forme de base annulaire, qui comprend un fond (31) sensiblement plat ou légèrement bombé, une nervure de paroi (32) sensiblement cylindrique qui fait saillie sensiblement perpendiculairement à partir du fond (31), et une ouverture de passage centrale (33) pour une ou la tige isolante frontale (16) du stator (2).

18. Moteur électrique selon la revendication 17,
**caractérisé en ce que** le disque de commande (6) présente une nervure annulaire (34) qui fait saillie à partir du fond (31) et entoure l'ouverture de passage centrale (33), et qui est en particulier adaptée, avec liaison par complémentarité de forme, à un contour extérieur de la rainure (29) de la partie collerette (5) pour recevoir la tige isolante frontale (16) du stator (2).

19. Moteur électrique selon l'une des revendications 1 à 18,
**caractérisé en ce que** le disque de commande (6) présente des évidements (35) partant de sa périphérie, s'étendant sensiblement radialement, en particulier adaptés au contour extérieur des douilles réceptrices (20) de la partie collerette (5).

20. Moteur électrique selon l'une des revendications 1 à 19,
**caractérisé en ce que** le disque de commande (6) présente des éléments d'encliquetage (36), en particulier des crochets d'encliquetage disposés sur son fond (31) dans la région des évidements (35), pour l'encliquetage avec la partie collerette (5).

21. Moteur électrique selon l'une des revendications 1 à 20,
**caractérisé en ce que** le disque de commande (6) présente sur son côté qui est le plus éloigné du stator (2) dans l'état de montage, des nervures de serrage (37) pour des lignes électriques, en particulier pour les lignes électriques (9) d'un câble ou du câble de raccordement du moteur (8).

22. Moteur électrique selon l'une des revendications 1 à 21,
**caractérisé en ce que** le disque de commande (6) présente sur son côté qui est le plus éloigné du stator (2) dans l'état de montage, un logement (38) pour un contrôleur de température (39).

23. Moteur électrique selon l'une des revendications 1 à 21,
**caractérisé en ce que** le disque de commande (6) présente, en particulier dans la région proche de la périphérie de son fond (31), des ouvertures de passage ou des éléments de fixation pour des broches (40), en particulier pour des broches plates, pour la réalisation des connexions à broches avec les raccordements électriques des enroulements (3) du stator (2).

24. Moteur électrique selon l'une des revendications 1 à 23,
**caractérisé en ce que** le disque de commande (6) présente, en particulier dans la région du bord intérieur de son fond (31), une ouverture de passage ou un élément de fixation pour une broche (41), en particulier pour une broche plate, destinée à la réalisation d'une connexion à broches avec le raccordement électrique d'une ligne de terre du stator (2).

25. Moteur électrique selon la revendication 15 ou 24,
**caractérisé en ce que**, dans l'unité d'appareil (4) composée de la partie collerette (5) et du disque de commande (6), la broche (41) destinée à établir la connexion à broches avec le raccordement électrique de la ligne de terre du stator (2) est disposée dans la région de la ligne de tracé de la rainure (29) de la partie collerette (5) destinée à recevoir la tige isolante frontale du stator (2), la rainure (29) étant interrompue dans la région de la broche (41).

26. Moteur électrique selon une des revendications 1 à 25,
**caractérisé en ce que** les raccordements électriques des enroulements (3) du stator (2) sont réalisés sous la forme d'éléments de connecteurs à broches (15) disposés dans des broches femelles (14).

27. Moteur électrique selon une des revendications 1 à 26,
**caractérisé en ce que**, sur le stator (2), un raccordement pour une ou la ligne de terre est réalisé sous la forme d'un élément de connecteur à broche (17) disposé en particulier à l'intérieur d'une tige isolante ou de la tige isolante (16) du stator (2).
